(19) Europäisches Patentamt / European Patent Office / Office européen des brevets

(11) **EP 3 311 933 B1**

(12) **EUROPEAN PATENT SPECIFICATION**

(45) Date of publication and mention
of the grant of the patent:
**06.12.2023 Bulletin 2023/49**

(21) Application number: **17197126.0**

(22) Date of filing: **18.10.2017**

(51) International Patent Classification (IPC):
**B21D 39/04** (2006.01)   **F16B 17/00** (2006.01)
**B23P 11/00** (2006.01)   **F16L 13/14** (2006.01)
**F04C 23/00** (2006.01)   **F01C 21/10** (2006.01)

(52) Cooperative Patent Classification (CPC):
**B21D 39/04; B23P 11/005; F01C 21/10;
F04C 23/008; F16B 17/004; F16L 13/141;**
F16L 2013/145

(54) **CAULKING TOOL, MANUFACTURING METHOD OF CAULKING STRUCTURE, AND MANUFACTURING METHOD OF COMPRESSOR**

VERSTEMMWERKZEUG, HERSTELLUNGSVERFAHREN FÜR EINE VERSTEMMUNGSSTRUKTUR UND HERSTELLUNGSVERFAHREN FÜR EINEN KOMPRESSOR

OUTIL DE SERTISSAGE, PROCÉDÉ DE FABRICATION DE STRUCTURE DE SERTISSAGE ET PROCÉDÉ DE FABRICATION DE COMPRESSEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2016 JP 2016205869**

(43) Date of publication of application:
**25.04.2018 Bulletin 2018/17**

(73) Proprietor: **MITSUBISHI HEAVY INDUSTRIES
THERMAL SYSTEMS, LTD.
Minato-ku
Tokyo 108-8215 (JP)**

(72) Inventors:
• **TAKAHASHI, Kazuki**
  **Tokyo 108-8215 (JP)**
• **KIMATA, Yoshiyuki**
  **Tokyo 108-8215 (JP)**
• **TAKASU, Yogo**
  **Tokyo 108-8215 (JP)**
• **SATO, Hajime**
  **Tokyo 108-8215 (JP)**
• **HAMANO, Masashi**
  **Tokyo 108-8215 (JP)**
• **TATEISHI, Taichi**
  **Tokyo 108-8215 (JP)**
• **YAMASHITA, Takuma**
  **Tokyo 108-8215 (JP)**
• **KANAI, Akihiro**
  **Tokyo 108-8215 (JP)**

(74) Representative: **Cabinet Beau de Loménie
158, rue de l'Université
75340 Paris Cedex 07 (FR)**

(56) References cited:
**EP-A1- 3 037 665      JP-A- H08 332 529
JP-A- 2009 243 602**

**Description**

BACKGROUND OF THE INVENTION

Field of the Invention

The present invention relates to a caulking tool, a manufacturing method of a caulking structure, and a manufacturing method of a compressor.

Description of Related Art

In the related art, a compressor which is used in an air conditioner or other devices having a refrigeration cycle is known. For example, a sealed scroll compressor is used as the compressor for such a purpose. In the sealed scroll compressor, a motor and a scroll compression mechanism which is driven by the motor are accommodated in the casing. A rotary shaft of the motor is rotatably supported to the casing by a bearing inside the casing and thus, power from the motor can be transmitted to the compression mechanism.

Here, in the sealed scroll compressor, for example, as described in Patent Document 1, a portion of a casing is press-fitted into a caulking hole of a bearing which supports a rotary shaft, and thus, the bearing is caulked and fixed to the casing.

The caulking hole is formed by pressing a caulking tool to the bearing prior to the caulking and fixing. Document JP2009243602 presents an example of a known caulking tool as per the preamble of claims 1 and 3.

[Patent Document 1] Japanese Unexamined Patent Application, First Publication No. 2015-98812

SUMMARY OF THE INVENTION

However, when the caulking hole is formed using the caulking tool of the related art, it is difficult to accurately adjust a machining depth (a degree of pressing of a machining tool) of the caulking tool to the bearing, and corners (steps) are likely to be formed on an opening edge of the caulking hole. If a portion of the casing is press-fitted to the caulking hole in a state where the corners is formed on the opening edge of the caulking hole, a corner is formed in the casing along the corner of the opening edge. Accordingly, stress concentrates at the position of the formed corner of the casing, and cracks or the like is likely to be generated in the casing.

The present invention provides a caulking tool, a manufacturing method of a caulking structure, and manufacturing of a compressor capable of preventing occurrence of stress concentration when two members are caulked and fixed to each other.

According to a first aspect of the present invention, there is provided a caulking tool as defined in claim 1, including: a protrusion portion which is formed in a columnar shape; a main body portion which is disposed on a base end side of the protrusion portion and is formed in a columnar shape having a larger diameter than that of the protrusion portion; and a connection portion which connects a base end of the protrusion portion and the main body portion to each other, in which an outer surface of the connection portion is an R surface which is annular about an axis of the protrusion portion and is formed in a recessed shape, and a surface of the main body portion facing the protrusion portion side is an inclined surface which is smoothly continued to the R surface and is inclined to a side separated from the protrusion portion toward the outside in a radial direction of the protrusion portion, wherein a tip portion of the protrusion portion has a conical shape about the axis.

In a case where two members are caulked and fixed to each other, when the caulking hole is formed on one member of the two members, the outer surface of the connection portion of the caulking tool is pressed to the one member. Accordingly, the outer surface of the connection portion becomes the R surface, and thus, the opening edge of the caulking hole is formed in the R surface shape. Therefore, a corner (step) is not formed on the opening edge of the caulking hole, and when the other member is caulked and fixed to the caulking hole of the one member, a corner is also not formed on the other member, and it is possible to avoid a shape which causes stress concentration to be generated in the other member. In addition, the surface of the main body portion facing the protrusion portion side becomes the inclined surface. Accordingly, the opening edge of the caulking hole reliably becomes the R surface shape, and thus, even when the tool is deeply pushed into the one member, a corner is hardly formed on the surface of the one member at a position on the outside in the radial direction of the opening edge or only an obtuse corner is formed. Therefore, when the other member is caulked and fixed to the caulking hole of the one member at this position, it is possible to avoid a shape which causes stress concentration to be generated in the other member.

In the caulking tool of a second aspect of the present invention, in the first aspect, in a case where a diameter of the main body portion is defined as D, an inner diameter of a caulking hole formed in a member by the protrusion portion is defined as A, and a curvature radius of the R surface is defined as a, D > A + 2a is satisfied.

In a case where the tool has the inclined surface on the main body portion, a relationship between the dimension of the caulking hole and the dimension of the caulking tool satisfying D > A + 2a is geometrically and inevitably determined. That is, if the above Expression is satisfied, the inclined surface is formed on the main body portion of the caulking tool. Therefore, since the inclined surface is formed on the main body portion, the opening edge of the caulking hole reliably becomes the R surface shape. Thereby, even when the tool is more deeply pushed, a corner is hardly formed on the surface of the one member at a position on the outside in the radial direction of the opening edge or only an obtuse corner is formed. Therefore, it is possible to avoid a shape which causes stress concentration to be generated in the other member caulked and fixed to the caulking hole at the position corresponding to a position where the inclined surface is formed.

According to a third aspect of the present invention, there is provided a caulking tool as defined in claim 3, including: a protrusion portion which is formed in a columnar shape; a main body portion which is disposed on a base end side of the protrusion portion and is formed in a columnar shape having a larger diameter than that of the protrusion portion; and a connection portion which connects a base end of the protrusion portion and the main body portion to each other, in which an outer surface of the connection portion is a chamfered surface which is annularly formed about an axis of the protrusion portion and in which an angle with respect to a straight line orthogonal to the axis is less than 45°, and a surface of the main body portion facing the protrusion portion side is an inclined surface which is continued to an outer surface of the connection portion and is inclined to a side separated from the protrusion portion toward the outside in a radial direction of the protrusion portion, wherein a tip portion of the protrusion portion has a conical shape about the axis.

In this way, the outer surface of the connection portion is the chamfered surface having the angle less than 45°. Accordingly, an obtuse corner (step) having an angle more than 135° is formed at the position at which the opening edge of the caulking hole in one member of two members caulked and fixed to each other is connected to the inclined surface. Accordingly, it is possible to prevent stress concentration from occurring at this position in the other member caulked and fixed to the caulking hole. In addition, the surface of the main body portion of the caulking tool facing the protrusion portion side becomes the inclined surface. Accordingly, the opening edge of the caulking hole reliably becomes the chamfered surface shape, and thus, even when the tool is deeply pushed, a corner is hardly formed on the surface of the second member at a position on the outside in the radial direction of the opening edge or only an obtuse corner is formed. Therefore, it is possible to prevent stress concentration from occurring in the other member at this position.

According to a fourth aspect of the present invention, there is provided a manufacturing method of a caulking structure in which a first member is fixed to a second member using the caulking tool according to any one of the first to third aspects, including: a preparation process of forming a tool insertion hole in the second member; a pressing process of, after the preparation process, inserting the protrusion portion of the caulking tool into the tool insertion hole and pressing the connection portion to a surface of the second member to form a caulking hole; a member disposition process of, after the pressing process, disposing the first member so as to overlap the caulking hole; and a caulking process of, after the member disposition process, driving a surface of the first member toward the caulking hole to fix the second member to the first member.

According to the manufacturing method of a caulking structure, the outer surface of the connection portion is pressed to the second member in the pressing process. Here, the outer surface of the connection portion is an R surface or a chamfered surface having an angle less than 45°. Accordingly, a corner (step) is not formed at the position at which the opening edge of the caulking hole of the second member is connected to the inclined surface or an obtuse corner (step) having an angle more than 135° is formed. Therefore, it is possible to prevent stress concentration from occurring in the first member at this position. The surface of the connection portion facing the protrusion portion side becomes the inclined surface. Accordingly, when the caulking tool is pressed to the second member, the opening edge of the caulking hole reliably becomes the R surface shape or the chamfered surface shape. Therefore, even when the tool is deeply pushed, a corner is hardly formed on the surface of the second member at a position on the outside in the radial direction of the opening edge or only an obtuse corner is formed. Thereby, it is possible to prevent stress concentration from occurring in the first member at this position.

According to a fifth aspect of the present invention, there is provided a manufacturing method of a compressor, comprising: the manufacturing method of a caulking structure according to claim 4, in which the preparation process, the pressing process, the member disposition process, and the caulking process are performed in a condition where the first member is set to a casing and the second member is set to a bearing which is disposed inside the casing and rotatably supports a rotary shaft which performs transmission of power for compressing a fluid with respect to the first member.

Since the manufacturing method of a compressor includes the manufacturing method of a caulking structure, a corner (step) is not formed on the opening edge of the caulking hole of the bearing or an obtuse corner (step) having an angle more than 135° is formed. Therefore, it is possible to prevent stress concentration from occurring in the casing at this position. Accordingly, when the caulking tool is pressed to the bearing, the opening edge of the caulking hole reliably becomes the R surface shape or the chamfered surface shape. Therefore, even when the tool is deeply pushed, a corner is hardly formed on the surface of the bearing at a position on the outside in the radial direction of the opening edge of the caulking hole or only an obtuse corner is formed. Thereby, it is possible to prevent stress concentration from occurring in the casing at this position.

According to the caulking tool, the manufacturing method of a caulking structure, and the manufacturing method of a compressor, it is possible to prevent occurrence of stress concentration when two members are caulked and fixed to each other.

BRIEF DESCRIPTION OF THE DRAWINGS

FIG. 1 is a partially sectional view showing a sealed scroll compressor which is manufactured by a first embodiment of the present invention.
FIG. 2 is a sectional view showing the shape of a caulking hole in a bearing of the sealed scroll compressor manufactured by the first embodiment of the present invention and the shape of a caulking protrusion in a casing of the sealed scroll compressor, and shows a portion indicated by an arrow Z in FIG. 1.
FIG. 3 is a side view showing a caulking tool which is used when caulking and fixing are performed by a manufacturing method of a first embodiment of the present invention.
FIG. 4 is a flowchart showing a procedure of the manufacturing method of a first embodiment of the present invention.
FIG. 5A is a side view showing a state where a caulking tool is pushed into a tool insertion hole to exceed a predetermined amount and FIG. 5B is a side view showing a state where the caulking tool is pushed into the tool insertion hole to be less than the predetermined amount when a sealed scroll compressor is manufactured.
FIG. 6 is a side view showing a state where the caulking tool, which is used when the caulking and fixing are performed by the manufacturing method of the first embodiment of the present invention, is pushed into a tool insertion hole to exceed a predetermined amount.
FIG. 7 is a sectional view showing the shape of a caulking hole which is formed in a bearing of a sealed scroll compressor manufactured by a second embodiment of the present invention.
FIG. 8 is a side view showing a caulking tool which is used when caulking and fixing are performed in the sealed scroll compressor manufactured by the second embodiment of the present invention.

DETAILED DESCRIPTION OF THE INVENTION

Hereinafter, a sealed scroll compressor 1 (hereinafter, simply referred to as a compressor 1) manufactured by embodiments of the present invention and a manufacturing method of the compressor 1 will be described.

[First Embodiment]

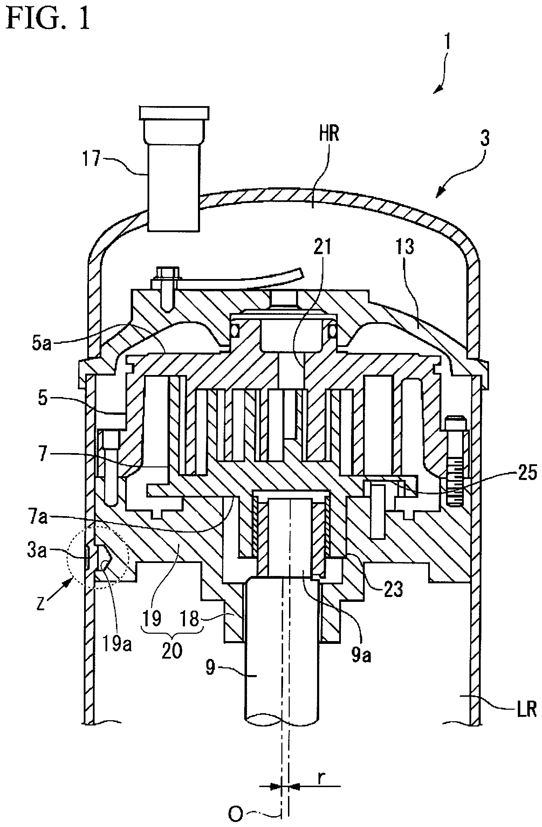

As shown in FIG. 1, the compressor 1 includes a casing (first member) 3, a fixed scroll 5 which is accommodated in the casing 3 and configures a compression mechanism, an orbit scroll 7, a bearing 20, and a main shaft (rotary shaft) 9.

The casing 3 is a sealed container in which the fixed scroll 5, the orbit scroll 7, the bearing 20, the main shaft 9, and other members configuring the compression mechanism are accommodated to be installed. A discharge cover 13, a suction pipe (not shown), and a discharge pipe 17 are attached to the casing 3.

The discharge cover 13 divides the inside of the casing 3 into a high-pressure chamber HR and a low-pressure chamber LR.

A low-pressure refrigerant (fluid) is sucked into the low-pressure chamber LR through the suction pipe from the outside. A high-pressure refrigerant is discharged from the high-pressure chamber HR to the outside through the discharge pipe 17.

The main shaft 9 transmits a rotational driving force of an electric motor (not shown) provided in the lower portion inside the casing 3 to the orbit scroll 7. The main shaft 9 is rotatably supported approximately perpendicularly inside the casing 3. An eccentric pin 9a which is driven to turn the orbit scroll 7 is provided on the upper end portion of the main shaft 9. The eccentric pin 9a is a columnar member which is provided at a position to be eccentric by a turning revolution radius r of the orbit scroll 7 from an axis O which is a rotation center of the main shaft 9 on the upper end surface of the main shaft 9.

The fixed scroll 5 and the orbit scroll 7 compresses a refrigerant which flows into the low-pressure chamber LR of the casing 3 and discharges the refrigerant to the high-pressure chamber HR. In the fixed scroll 5 and the orbit scroll 7, the fixed scroll 5 is disposed on the upper side in the casing 3 and the orbit scroll 7 is disposed on the lower side in the casing 3. The fixed scroll 5 and the orbit scroll 7 are disposed to mesh with each other.

A discharge port 21 which a compressed refrigerant pass is provided at the center (the center of a surface positioned on the upper side in FIG. 1) of a rear surface of an end plate 5a of the fixed scroll 5.

A boss 23 into which the eccentric pin 9a of the main shaft 9 is inserted is provided at the center (the center of a surface positioned on the lower side in FIG. 1) of a rear surface of an end plate 7a of the orbit scroll 7. Similarly, a recessed portion 25 which is approximately circular when viewed from the main shaft 9 side is formed on a circumference having a predetermined radius from the center of the orbit scroll 7 on the rear surface of the end plate 7a.

The bearing 20 includes a bearing body 18 which rotatably supports the main shaft 9 and a bearing casing contact portion 19 which is integrally provided with the bearing body 18 on the outside in the radial direction and supports the orbit scroll 7 from the lower portion. The bearing casing contact portion 19 is a member which is formed in an annular shape about the main shaft 9.

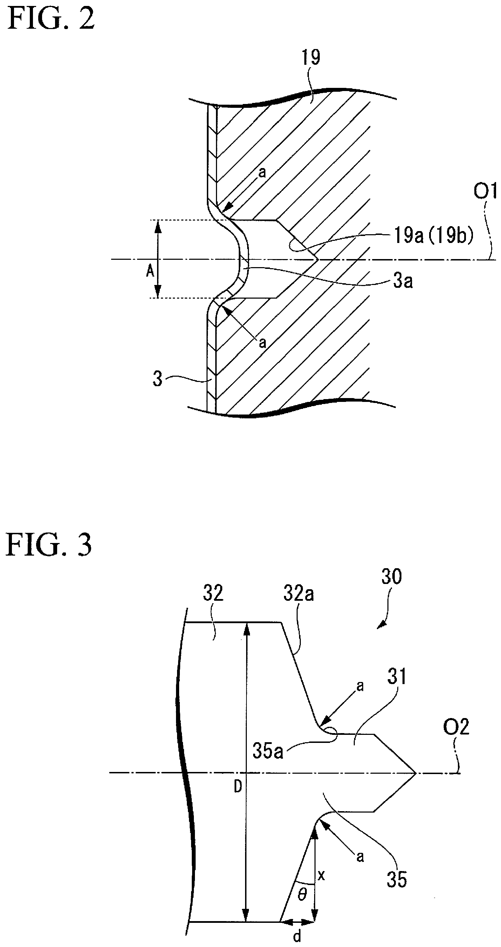

The outer peripheral surface of the bearing casing contact portion 19 is provided to come into contact with the inner peripheral surface of the casing 3. In the bearing casing contact portion 19, a plurality of caulking holes 19a are formed on the outer peripheral surface at intervals therebetween in the circumferential direction. As shown in FIG. 2, each of the caulking holes 19a is formed by pressing a caulking tool 30 described later to the outer peripheral surface of the bearing casing contact portion 19. A caulking protrusion 3a which is press-fitted into the caulking hole 19a is formed on the casing 3 at the position corresponding to the caulking hole 19a.

Each caulking hole 19a has a circular cross section which is provided to be recessed from the outer peripheral surface of the bearing casing contact portion 19 toward the inside in the radial direction and is positioned about an axis O1. More specifically, the caulking hole 19a has a diameter decreasing from an intermediate position in an extension direction of the caulking hole 19a toward the inside in the radial direction and is tapered such that the tip portion thereof is formed in a conical shape.

An opening edge of the caulking hole 19a continued to the outer peripheral surface of the bearing casing contact portion 19 is formed in an R surface 35a shape toward the outside in the radial direction of the bearing casing contact portion 19 and outward the caulking hole 19a.

Here, if a curvature radius of the R surface 35a is defined as a and a plate thickness of the casing 3 is defined as t, 0.1 < a/t < 1.0 may be satisfied. That is, if the thickness t of the casing 3 is 4 [mm], 0.4 [mm] < a < 4 [mm] may be satisfied. The opening edge having the R surface 35a shape is smoothly connected to the outer peripheral surface (surface) of the bearing casing contact portion 19 without forming a corner. Hereinafter, the maximum inner diameter (the diameter of a portion in which the diameter does not decrease) of the caulking hole 19a is defined as A [mm],

Next, the caulking tool 30 of the present embodiment which is used in caulking and fixing of the bearing casing contact portion 19 will be described with reference to FIG. 3.

The caulking tool 30 includes a protrusion portion 31 which is formed in a columnar shape, a main body portion 32 which is positioned on a base end side of the protrusion portion 31, and a connection portion 35 which connects a base end of the protrusion portion 31 and the main body portion 32 to each other.

The protrusion portion 31 is formed in a columnar shape about an axis 02 as a whole and has a conical shape at the tip portion by reducing the diameter so as to be tapered from the intermediate portion in the extension direction toward the tip. Hereinafter, the maximum diameter (a diameter of a portion which is not formed in a conical shape) of the protrusion portion 31 is the same as the inner diameter A of the caulking hole 19a.

The main body portion 32 can be held by a device (not shown) and is formed is a columnar shape which has a larger diameter than that of the protrusion portion 31 and is positioned about the axis 02. The main body portion 32 is disposed on the base end side of the protrusion portion 31. Hereinafter, the diameter of the main body portion 32 is defined as D [mm].

The connection portion 35 connects the protrusion portion 31 and the main body portion 32 between the base end of the protrusion portion 31 and the main body portion 32. The outer surface of the connection portion 35 becomes a radiused surface (R surface) 35a which is recessed toward the main body portion 32 and is formed in an annular shape about the axis 02. The curvature radius of the R surface 35a becomes a [mm] is the same as the curvature radius of the opening edge of the caulking hole 19a.

Here, the R surface 35a is continued to be smoothly connected to the outer peripheral surface of the protrusion portion 31 without forming a corner on the end portion on the inside in the radial direction. The R surface 35a is continued to be smoothly connected to the surface of the main body portion 32 facing the protrusion portion 31 side in the direction of the axis 02 without forming a corner on the end portion on the outside in the radial direction. The surface of the main body portion 32 facing the protrusion portion 31 side is an inclined surface 32a which is inclined to a side separated from the protrusion portion 31 toward the outside in the radial direction.

As shown in FIG. 3, if an inclination angle (an inclination angle with respect to a straight line orthogonal to the axis 02 of the protrusion portion 31) of the inclined surface 32a of the main body portion 32 is defined as $\theta$, the maximum value of a machining depth (a distance in the direction of the axis 02 by which the main body portion 32 is pushed into the bearing casing contact portion 19) of the caulking hole 19a is defined as d [mm], and a dimension in the radial direction from the connection position between the R surface 35a and the inclined surface 32a to the end portion of the main body portion 32 on the outside in the radial direction is defined as x [mm], Expression (1) below is established.

$$x = d \,/\, \tan\theta \,\ldots\, (1)$$

As described above, if the inner diameter of the caulking hole 19a is defined as A [mm], the diameter of the main body portion 32 of the caulking tool 30 is defined as D [mm], and the curvature radius of the R surface 35a is defined as a [mm], Expression (2) below is established.

$$D \geq A + 2a + 2x \,\ldots\, (2)$$

Accordingly, Expression (3) below is derived from Expression (1) and Expression (2).

$$D \geq A + 2a + 2d \,/\, \tan\theta \,\ldots\, (3)$$

Here, 2d / tanθ > 0 is obtained from the maximum value d of the machining depth of the caulking hole 19a > 0 and 0 < θ < 90°. Accordingly, even when 2d / tanθ approximates 0 in Expression (3), the inequality is established. Accordingly, finally, Expression (4) below is established.

$$D > A + 2a \ldots (4)$$

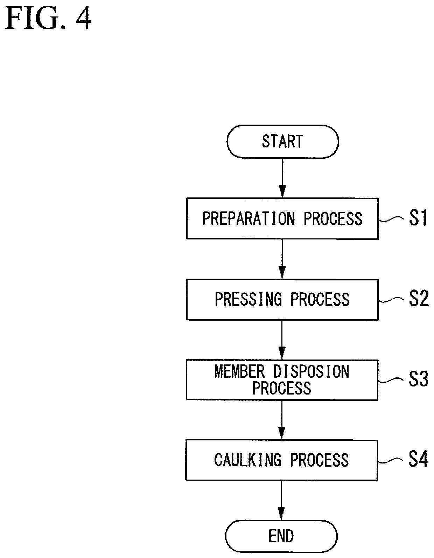

Next, a procedure of a manufacturing method of the compressor 1 using the above-described caulking tool 30 will be described with reference to FIG. 4.

As shown in FIG. 4, first, a preparation process S1 is performed. In the preparation process S1, the tool insertion hole 19b is formed on the outer peripheral surface of the bearing casing contact portion 19. The inner diameter of the tool insertion hole 19b is formed to be the same as that of the caulking hole 19a or to be slightly smaller than that of the caulking hole 19a. In the present embodiment, the tool insertion holes 19b are formed at a plurality of locations at intervals therebetween in the circumferential direction.

A pressing process S2 is performed after the preparation process S1. In the pressing process S2, the protrusion portion 31 of the caulking tool 30 is inserted into the tool insertion hole 19b to press the connection portion 35 to the outer peripheral surface (surface) of the bearing casing contact portion 19 so as to form the caulking hole 19a. In this case, the R surface 35a is pressed to the tool insertion hole 19b of the opening edge and the opening edge of the tool insertion hole 19b becomes the R surface 35a.

A member disposition process S3 is performed after the pressing process S2. In the member disposition process S3, the bearing 20 is disposed inside the casing 3 such that the inner surface of the casing 3 overlaps the caulking hole 19a.

A caulking process S4 is performed after the member disposition process S3. In the caulking process S4, the outer peripheral surface (surface) of the casing 3 is heated to be driven toward the caulking hole 19a. Accordingly, a portion of the casing 3 is plastically deformed to be recessed toward the inside and the caulking protrusion 3a is formed on the casing 3 at the position corresponding to the caulking hole 19a. In this way, the caulking protrusion 3a is press-fitted into the caulking hole 19a and thus, the bearing casing contact portion 19 is fixed to the casing 3.

According to the above-described manufacturing method of the compressor 1 of the present embodiment, the caulking hole 19a is formed using the caulking tool 30, and thus, the opening edge of the caulking hole 19a becomes the R surface 35a. Accordingly, a corner (step) is not formed on the opening edge of the caulking hole 19a. Therefore, when the bearing casing contact portion 19 is caulked and fixed to the casing 3, it is possible to prevent stress concentration from occurring in the casing 3 at a position corresponding to the opening edge of the caulking hole 19a.

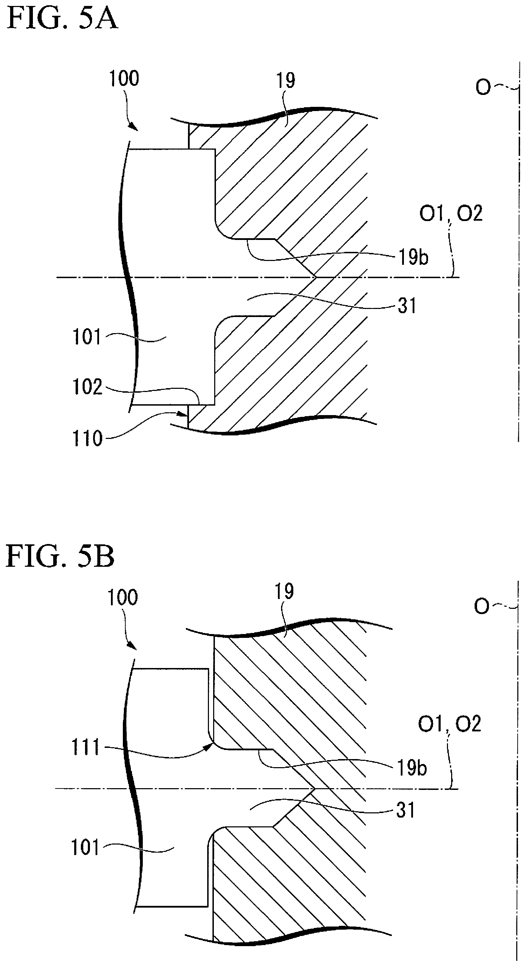

Here, as shown in FIG. 5A, if the above-described inclined surface 32a is not formed on the main body portion 101 of the caulking tool 100, in a case where the protrusion portion 31 of the caulking tool 100 is deeply pushed into the tool insertion hole 19b of the bearing casing contact portion 19 to reliably make the opening edge of the caulking hole 19a to the R surface 35a, a surface 102 facing the direction of the axis O of the main shaft 9 is formed on the outer peripheral surface of the bearing casing contact portion 19, and thus, a corner (step 110) is formed. As a result, when the caulking protrusion 3a is formed on the outer peripheral surface of the casing 3 and the caulking protrusion 3a is fixed to the caulking hole 19a, a corner (step) is formed on the caulking protrusion 3a at the position corresponding to the corner (step 110), and thus, stress concentration is likely to occur in the casing 3 at the position.

As shown in FIG. 5B, if the above-described inclined surface 32a is not formed on the main body portion 101 of the caulking tool 100, the caulking tool 100 is excessively pressed to the bearing casing contact portion 19 when the caulking hole 19a is formed. Accordingly, as shown in FIG. 5A, there is a concern that the corner (step 110) occurs, and the caulking tool 100 may not be sufficiently pressed to the bearing casing contact portion 19. In this case, the corner (step 111) is formed on the opening edge of the caulking hole 19a. As a result, when the caulking protrusion 3a is formed on the outer peripheral surface of the casing 3 and the caulking protrusion 3a is fixed to the caulking hole 19a, a corner (step) is formed on the caulking protrusion 3a at the position corresponding to the corner (step 111), and thus, stress concentration is likely to occur in the casing 3 at the position.

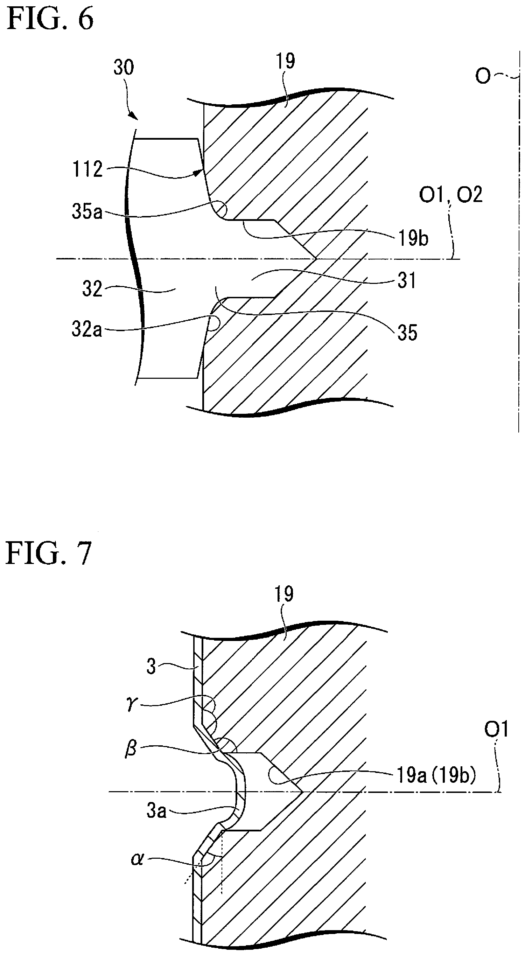

Meanwhile, in the present embodiment, the surface of the main body portion 32 of the caulking tool 30 facing the protrusion portion 31 side becomes the inclined surface 32a. Accordingly, as shown in FIG. 6, the opening edge of the caulking hole 19a reliably becomes the R surface 35a. Therefore, even when the protrusion portion 31 of the caulking tool 30 is deeply pushed into the tool insertion hole 19b of the bearing casing contact portion 19, the above-described corner (steps 110 and 111) is hardly formed on the outside in the radial direction of the opening edge of the caulking hole 19a or only an obtuse corner (step 112) is formed. Therefore, when the bearing casing contact portion 19 is caulked and fixed to the casing 3, it is possible to prevent stress concentration from occurring in the casing 3 at the position (step 112).

In a case where 0.4 [mm] < a < 4 [mm] is satisfied in the curvature radius a of the R surface 35a and 0.1 < a/t < 1.0 is satisfied, the curvature radius a does not become too small and does not become too large, and thus, the curvature radius a is appropriate. In other words, in a case where the curvature radius a is less than 0.4 [mm], the curvature radius a becomes too small. Accordingly, the shape similar to the shape in the case where the corner is formed on the opening edge portion of the caulking hole 19a is formed, and thus, stress concentration is likely to occur in the casing 3 at the position, which is not preferable. In a case where the curvature radius a is 4 [mm] or more, the curvature radius a becomes too large, and thus, the caulking protrusion 3a is likely to come off from the caulking hole 19a, which is not preferable.

[Second Embodiment]

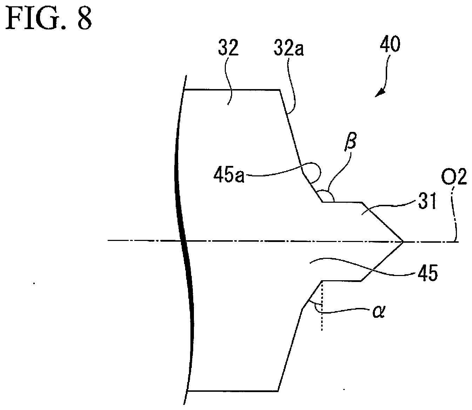

Next, a manufacturing method of the compressor 1 according to a second embodiment of the present invention will be described with reference to FIGS. 7 and 8. The same reference numerals are assigned to components similar to those of the first embodiment and detail descriptions thereof are omitted.

As shown in FIG. 8, in a caulking tool 40 used in the manufacturing method of the present embodiment, a shape of a connection portion 45 is different from that of the first embodiment.

An outer surface of the connection portion 45 of the caulking tool 40 is formed in an annular shape about the axis 02 of the protrusion portion 31 and becomes a chamfered surface 45a in which an angle $\alpha$ with respect to a straight line orthogonal to the axis 02 is less than 45°. In the angle $\alpha$, it is preferable that $0° < \alpha < 45°$ is satisfied, and the smaller $\alpha$, the more preferable. For example, more preferably, $0° < \alpha \leq 10°$ is satisfied. The chamfered surface 45a is formed in an obtuse corner having an angle $\beta$ and is continued to be connected to the outer peripheral surface of the protrusion portion 31. The chamfered surface 45a is formed in an obtuse corner having a larger angle than the angle $\beta$, that is, an angle $\gamma$ which is larger than 135° and is continued to be connected to the inclined surface 32a of the main body portion 32.

According to the above-described manufacturing method of the compressor 1 of the present embodiment, by forming the caulking hole 19a using the above-described caulking tool 40, the obtuse corner having the angle $\beta$ is formed on the opening edge of the caulking hole 19a. That is, an acute corner is not formed. Accordingly, when the caulking protrusion 3a of the casing 3 is caulked and fixed to the caulking hole 19a, it is possible to prevent stress concentration from occurring in the casing 3 at the caulked and fixed position (the position of the caulking protrusion 3a).

The obtuse corner (step) having the angle $\gamma$ which is larger than 135° is formed at the position at which the opening edge of the caulking hole 19a is connected to the inclined surface 32a. Accordingly, it is possible to prevent stress concentration from occurring at the position in the casing 3 caulked and fixed to the caulking hole.

Similarly to the first embodiment (refer to FIG. 6), the surface of the main body portion 32 facing the protrusion portion 31 side becomes the inclined surface 32a. Accordingly, the opening edge of the caulking hole 19a reliably becomes the chamfered surface 45a. Thereby, even when the caulking tool 40 is more deeply pushed into the bearing casing contact portion 19, a corner (step) is hardly formed on the outside in the radial direction of the opening edge of the caulking hole 19a or only an obtuse corner is formed. Therefore, when the bearing casing contact portion 19 is caulked and fixed to the casing 3, it is possible to prevent stress concentration from occurring in the casing 3 at the caulked and fixed position.

Hereinbefore, the embodiments of the present invention are described with reference to the drawings. However, configurations of each embodiment and combinations thereof are examples, and thus, additions, omissions, substitutions, and other modifications of configurations can be made while remaining within the scope of the claims.

For example, in the embodiments, the case where the casing 3 and the bearing casing contact portion 19 of the compressor 1 are caulked and fixed to each other is described. However, the present invention is not limited to this. For example, the caulking and fixing may be performed on other portions of the compressor 1 using the above-described caulking tool 30 (40).

Moreover, in the above-described embodiments, the case where the manufacturing method is applied to the compressor 1 is described. However, the manufacturing method may be applied so as to manufacture the caulking structure when two members (first member and second member) are caulked and fixed to each other.

EXPLANATION OF REFERENCES

1: sealed scroll compressor (caulking structure)
3: casing (first member)
3a: caulking protrusion
5: fixed scroll
5a: end plate
7: orbit scroll
7a: end plate
9: main shaft (rotary shaft)
9a: eccentric pin
13: discharge cover
17: discharge pipe
18: bearing body
19: bearing casing contact portion
19a: caulking hole
19b: tool insertion hole
20: bearing (second member)
21: discharge port
23: boss
25: recessed portion
30: caulking tool
31: protrusion portion
32: main body portion
32a: inclined surface
35: connection portion

35a: R surface
O: axis
O1: axis
O2: axis
S1: preparation process
S2: pressing process
S3: member disposition process
S4: caulking process
HR: high-pressure chamber
LR: low-pressure chamber
40: caulking tool
45: connection portion
45a: chamfered surface
100: caulking tool
101: main body portion
102: surface
110: step
111: step
112: step

**Claims**

1. A caulking tool (30), comprising:

   a protrusion portion (31) which is formed in a columnar shape;
   a main body portion (32) which is disposed on a base end side of the protrusion portion and is formed in a columnar shape having a larger diameter than that of the protrusion portion; and
   a connection portion (35) which connects a base end of the protrusion portion and the main body portion to each other,
   an outer surface of the connection portion is a radiused surface (35a) which is annular about an axis (02) of the protrusion portion and is formed in a recessed shape, and
   wherein a surface of the main body portion (32) facing the protrusion portion side is an inclined surface (32a) which is smoothly continued to the radiused surface (35a) and is inclined to a side separated from the protrusion portion (31) toward the outside in a radial direction of the protrusion portion;
   **characterized in that**

   a tip portion of the protrusion portion has a conical shape about the axis (02).

2. The caulking tool according to claim 1,
   wherein in a case where a diameter of the main body portion (32) is defined as D, a maximum diameter of the protrusion portion is defined as A, and a curvature radius of the radiused surface (35a) is defined as a, D > A + 2a is satisfied.

3. A caulking tool (30), comprising:

   a protrusion portion (31) which is formed in a columnar shape;
   a main body portion (32) which is disposed on a base end side of the protrusion portion and is formed in a columnar shape having a larger diameter than that of the protrusion portion; and
   a connection portion (45) which connects a base end of the protrusion portion and the main body portion to each other, and
   a surface (32a) of the main body portion (32) facing the protrusion portion side is an inclined surface (32a) which is continued to an outer surface of the connection portion (45) and is inclined to a side separated from the protrusion portion toward the outside in a radial direction of the protrusion portion

   **characterized in that**
   an outer surface (45a) of the connection portion is a chamfered surface (45a) which is annularly formed about an axis of the protrusion portion and in which an angle with respect to a straight line orthogonal to the axis is less than 45°, and
   a tip portion of the protrusion portion has a conical shape about the axis (02).

4. A manufacturing method of a caulking structure in which a first member is fixed to a second member using the caulking tool (30,40) according to any one of claims 1 to 3, comprising:

   a preparation process (S1) of forming a tool insertion hole (19b) in the second member (19);
   a pressing process (S2) of, after the preparation process, inserting the protrusion portion (31) of the caulking tool into the tool insertion hole and pressing the connection portion to a surface of the second member to form a caulking hole;
   a member disposition process (S3) of, after the pressing process, disposing the first member (3) so as to overlap the caulking hole; and
   a caulking process (S4) of, after the member disposition process, driving a surface of the first member (3) toward the caulking hole to fix the second member to the first member.

5. A manufacturing method of a compressor, comprising:

   the manufacturing method of a caulking structure according to claim 4,
   wherein the preparation process, the pressing process, the member disposition process, and the caulking process are performed in a condition where the first member (3) is set to a casing and the second member (19) is set to a bearing which is disposed inside the casing and rotatably supports a rotary shaft which performs transmission of power for compressing a fluid with respect to the first member.

## Patentansprüche

1. Verstemmwerkzeug (30), umfassend:

   einen Vorsprungabschnitt (31), der säulenförmig gebildet ist;
   einen Hauptkörperabschnitt (32), der an einer Basisendseite des Vorsprungabschnitts angeordnet ist und in einer säulenartigen Form gebildet ist, die einen größeren Durchmesser als der des Vorsprungabschnitts aufweist; und
   einen Verbindungsabschnitt (35), der ein Basisende des Vorsprungabschnitts und den Hauptkörperabschnitt miteinander verbindet,
   eine Außenfläche des Verbindungsabschnitts eine gerundete Fläche (35a) ist, die ringförmig um eine Achse (02) des Vorsprungabschnitts ist und in einer vertieften Form gebildet ist, und
   wobei eine Fläche des Hauptkörperabschnitts (32), die der Vorsprungabschnittsseite zugewandt ist, eine geneigte Fläche (32a) ist, die sich gleichförmig zu der gerundeten Fläche (35a) fortsetzt und zu einer von dem Vorsprungabschnitt (31) getrennten Seite nach außen in eine radiale Richtung des Vorsprungabschnitts geneigt ist;
   **dadurch gekennzeichnet, dass** ein Spitzenabschnitt des Vorsprungabschnitts eine konische Form um die Achse (02) aufweist.

2. Verstemmwerkzeug nach Anspruch 1,
   wobei in einem Fall, in dem ein Durchmesser des Hauptkörperabschnitts (32) als D definiert ist, ein maximaler Durchmesser des Vorsprungabschnitts als A definiert ist und ein Krümmungsradius der gerundeten Fläche (35a) als a definiert ist, D>A+ 2a erfüllt ist.

3. Verstemmwerkzeug (30), umfassend:

   einen Vorsprungabschnitt (31), der säulenförmig gebildet ist;
   einen Hauptkörperabschnitt (32), der an einer Basisendseite des Vorsprungabschnitts angeordnet ist und in einer säulenartigen Form gebildet ist, die einen größeren Durchmesser als der des Vorsprungabschnitts aufweist; und
   einen Verbindungsabschnitt (45), der ein Basisende des Vorsprungabschnitts und den Hauptkörperabschnitt miteinander verbindet, und
   eine Fläche (32a) des Hauptkörperabschnitts (32), die der Vorsprungabschnittsseite zugewandt ist, eine geneigte Fläche (32a) ist, die sich zu einer Außenfläche des Verbindungsabschnitts (45) fortsetzt und zu einer von dem Vorsprungabschnitt getrennten Seite nach außen in einer radialen Richtung des Vorsprungabschnitts geneigt ist
   **dadurch gekennzeichnet, dass**
   eine äußere Fläche (45a) des Verbindungsabschnitts eine abgeschrägte Fläche (45a) ist, die ringförmig um eine Achse des Vorsprungabschnitts gebildet ist und in der ein Winkel in Bezug auf eine gerade Linie orthogonal zu der Achse weniger als 45° ist, und ein Spitzenabschnitt des Vorsprungabschnitts eine konische Form um die Achse (02) aufweist.

4. Herstellungsverfahren einer Verstemmungsstruktur, bei der ein erstes Element unter Verwendung des Verstemmwerkzeugs (30, 40) nach einem der Ansprüche 1 bis 3 an einem zweiten Element befestigt wird, umfassend:

   einen Vorbereitungsprozess (S1) eines Bildens eines Werkzeugeinführlochs (19b) in dem zweiten Element (19);
   einen Pressprozess (S2), bei dem nach dem Vorbereitungsprozess der Vorsprungabschnitt (31) des Verstemmwerkzeugs in das Werkzeugeinführloch eingeführt wird und der Verbindungsabschnitt an eine Fläche des zweiten Elements gepresst wird, um ein Verstemmungsloch zu bilden:

      ein Elementanordnungsprozess (S3), nach dem Pressprozess, eine Anordnens des ersten Elements (3), sodass es das Verstemmungsloch überlappt; und
      einen Verstemmungsprozess (S4) eines Antreibens einer Fläche des ersten Elements (3) in Richtung des Verstemmungslochs, um das zweite Element an dem ersten Element zu befestigen.

5. Herstellungsverfahren eines Verdichters, umfassend:

   das Herstellungsverfahren einer Verstemmungsstruktur nach Anspruch 4,
   wobei der Vorbereitungsprozess, der Pressprozess, der Elementanordnungsprozess und der Verstemmungsprozess in einem Zustand ausgeführt werden, in dem das erste Element (3) auf ein Gehäuse gesetzt wird und das zweite Element (19) auf ein Lager gesetzt wird, das innerhalb des Gehäuses angeordnet ist und drehbar eine Drehwelle trägt, die eine Kraftübertragung zum Komprimieren eines Fluids in Bezug auf das erste Element ausführt.

**Revendications**

1. Outil de calfatage (30) comprenant :

   une partie de saillie (31) qui est formée selon une forme colonnaire ;
   une partie de corps principal (32) qui est disposée sur un côté d'extrémité de base de la partie de saillie et est formée selon une forme colonnaire ayant un plus grand diamètre que celui de la partie de saillie ; et
   une partie de raccordement (35) qui raccorde une extrémité de base de la partie de saillie et la partie de corps principal entre elles,
   une surface externe de la partie de raccordement est une surface arrondie (35a) qui est annulaire autour d'un axe (02) de la partie de saillie et est formée selon une forme évidée, et
   dans lequel une surface de la partie de corps principal (32) faisant face au côté de la partie de saillie est une surface inclinée (32a) qui est continue, de manière régulière, par rapport à la surface arrondie (35a) et est inclinée vers un côté séparé de la partie de saillie (31) vers l'extérieur dans une direction radiale de la partie de saillie ;
   **caractérisé en ce que** :
   une partie de pointe de la partie de saillie a une surface conique autour de l'axe (02).

2. Outil de calfatage selon la revendication 1, dans lequel, dans un cas dans lequel un diamètre de la partie de corps principal (32) est défini comme étant D, un diamètre maximum de la partie de saillie est défini comme étant A, et un rayon de courbure de la surface arrondie (35a) est défini comme étant a, D > A + 2a est satisfait.

3. Outil de calfatage (30) comprenant :

   une partie de saillie (31) qui est formée selon une forme colonnaire ;
   une partie de corps principal (32) qui est disposée du côté de l'extrémité de base de la partie de saillie et est formée selon une forme colonnaire ayant un plus grand diamètre que celui de la partie de saillie ; et
   une partie de raccordement (45) qui raccorde une extrémité de base de la partie de saillie et la partie de corps principal entre elles, et
   une surface (32a) de la partie de corps principal (32) faisant face au côté de la partie de saillie est une surface inclinée (32a) qui est continue par rapport à une surface externe de la partie de raccordement (45) et est inclinée vers un côté séparé de la partie de saillie vers l'extérieur dans une direction radiale de la partie de saillie,
   **caractérisé en ce que** :

   une surface externe (45a) de la partie de raccordement est une surface chanfreinée (45a) qui est formée de manière annulaire autour d'un axe de la partie de saillie et dans laquelle un angle par rapport à une ligne droite orthogonale à l'axe est inférieur à 45°, et
   une partie de pointe de la partie de saillie a une forme conique autour de l'axe (02).

4. Procédé de fabrication d'une structure de calfatage dans laquelle un premier élément est fixé à un deuxième élément à l'aide de l'outil de calfatage (30, 40) selon l'une quelconque des revendications 1 à 3, comprenant :

   un processus de préparation (S1) pour former un trou d'insertion d'outil (19b) dans le deuxième élément (19) ;
   un processus de pression (S2) pour insérer, après le processus de préparation, la partie de saillie (31) de l'outil de calfatage dans le trou d'insertion d'outil et presser la partie de raccordement sur une surface du deuxième élément afin de former un trou de calfatage ;
   un processus de disposition d'élément (S3) pour disposer, après le processus de pression, le premier élément (3) afin de recouvrir le trou de calfatage ; et
   un processus de calfatage (S4) pour entraîner, après le processus de disposition d'élément, une surface du premier élément (3) vers le trou de calfatage afin de fixer le deuxième élément sur le premier élément.

5. Procédé de fabrication d'un compresseur, comprenant :

   le procédé de fabrication d'une structure de calfatage selon la revendication 4,
   dans lequel le processus de préparation, le processus de pression, le processus de disposition d'élément et le processus de calfatage sont réalisés dans une condition dans laquelle le premier élément (3) est placé sur un boîtier et le deuxième élément (19) est placé sur un palier qui est disposé à l'intérieur du boîtier et supporte, de manière rotative, un arbre rotatif qui réalise la transmission de la puissance pour comprimer un fluide par rapport au premier élément.

# FIG. 1

## FIG. 2

## FIG. 3

FIG. 4

```
        ┌──────────────┐
        │    START     │
        └──────────────┘
               │
               ▼
     ┌────────────────────┐
     │ PREPARATION PROCESS │ ─── S1
     └────────────────────┘
               │
               ▼
     ┌────────────────────┐
     │  PRESSING PROCESS   │ ─── S2
     └────────────────────┘
               │
               ▼
     ┌────────────────────┐
     │  MEMBER DISPOSION   │ ─── S3
     │      PROCESS        │
     └────────────────────┘
               │
               ▼
     ┌────────────────────┐
     │  CAULKING PROCESS   │ ─── S4
     └────────────────────┘
               │
               ▼
        ┌──────────────┐
        │     END      │
        └──────────────┘
```

## FIG. 5A

## FIG. 5B

## FIG. 6

## FIG. 7

## FIG. 8

**EP 3 311 933 B1**

**REFERENCES CITED IN THE DESCRIPTION**

**Patent documents cited in the description**

- JP 2009243602 B

- JP 2015098812 A